# EUROPEAN PATENT SPECIFICATION

(11) **EP 3 015 724 B1**
(45) Date of publication and mention of the grant of the patent: **08.08.2018**
(21) Application number: 15183351.4
(22) Date of filing: 01.09.2015
(51) Int. Cl.: F16C 7/02, F16C 9/04

(54) **CONNECTING ROD, INTERNAL COMBUSTION ENGINE, AUTOMOTIVE VEHICLE, AND PRODUCTION METHOD FOR CONNECTING ROD**
VERBINDUNGSSTANGE, BRENNKRAFTMASCHINE, KRAFTFAHRZEUG UND HERSTELLUNGSVERFAHREN FÜR VERBINDUNGSSTANGE
BIELLE, MOTEUR À COMBUSTION INTERNE, VÉHICULE AUTOMOBILE ET PROCÉDÉ DE PRODUCTION DE BIELLE

(30) Priority: 28.10.2014 JP 2014219581
(43) Date of publication of application: 04.05.2016
(73) Proprietor: Yamaha Hatsudoki Kabushiki Kaisha, Shizuoka-ken Shizuoka 438-8501 (JP)
(72) Inventor: Kubota, Tsuyoshi, Shizuoka-ken, Shizuoka 438-8501 (JP); Kojima, Yuuki, Shizuoka-ken, Shizuoka 438-8501 (JP); Matsushita, Kenichi, Shizuoka-ken, Shizuoka 438-8501 (JP); Miura, Tetsu, Shizuoka-ken, Shizuoka 438-8501 (JP)
(74) Representative: Moreland, David

(56) References cited:
- JP-A- 2005 188 741
- JP-A- 2006 308 027
- US-A- 4 970 783

## Description

### FIELD OF INVENTION

The present invention relates to a connecting rod, and more particularly to a titanium-alloy connecting rod, which is optionally of a fracture split-type and a production method thereof. The present invention also relates to an internal combustion engine and an automotive vehicle, such as a straddle-type or saddle-ride vehicle, that includes such a connecting rod.

### BACKGROUND OF INVENTION

In an internal combustion engine of an automotive vehicle, a member which is called a connecting rod (also known as a "con-rod") is used for linking a crankshaft to a piston. A connecting rod includes a bar-like rod main body, a small end provided at one end of the rod main body, and a big end provided at another end of the rod main body. The small end has a throughhole for allowing a piston pin to be extend therethrough, and is connected to a piston. On the other hand, the big end has a throughhole for allowing the crankpin to extend therethrough, and is connected to a crankshaft.

Connecting rods are generally classified into the "integral-type" and the "split-type". In a split-type connecting rod, the big end is split into a rod portion continuing from the rod main body and a cap portion for coupling to the rod portion with bolts or other fixing members. On the other hand, the big end of an integral-type connecting rod is not split.

Conventionally, steels have widely been used as the material of connecting rods. In recent years, use of a titanium alloy has been proposed in order to reduce the weight of a connecting rod. Examples of methods of producing a connecting rod by using a titanium alloy include occluded forging and closed forging as disclosed in Japanese Laid-Open Patent Publication No. 60-247432 (hereinafter "Patent Document 1"), and also hot forging as disclosed in Toshihiko MATSUBARA, "Development of Free-Cutting Titanium Alloy Connecting Rods", Titanium Zirconium, October 1991, vol. 39, 4th issue, pp. 175-184.

When producing a split-type connecting rod by using such methods, the material can enjoy an enhanced production yield by forging the big end as an integral piece, i.e., while the rod portion and the cap portion are kept together. However, after such forging is performed, the rod portion and the cap portion will inevitably need to be separated by subsequent machining. Even after the separation, it is necessary to process the mutually-abutting faces of the rod portion and the cap portion, or perform an alignment processing to allow the rod portion and the cap portion to be accurately assembled. Since titanium alloys are generally inferior to steels in terms of machinability, these processing steps are a factor that deteriorates the producibility of the titanium-alloy connecting rod or increases the production cost.

As a technique of solving this problem, the fracture technique has been proposed. The fracture technique is a technique of integrally forming a big end and then splitting the big end into a rod portion and a cap portion via brittle fracture. Brittle fracture produces complementary minute ruggednesses on the fractured surfaces of the rod portion and the cap portion. These fractured surfaces do not need to undergo further processing. Moreover, the minute ruggednesses that form in complementary manners on the fractured surfaces allow for accurate alignment when the rod portion and the cap portion are assembled, thus making it unnecessary to perform any processing for forming alignment structures. A connecting rod having a big end which is split by the fracture technique is referred to as a "fracture split-type connecting rod" in the present specification.

Titanium-alloy connecting rods of a fracture split type are not commonplace, although proposed in Japanese Laid-Open Patent Publication No. 2007 3000 (YAMAHA MOTOR CO LTD) hereinafter "Patent Document 2"). In other words, while the fracture technique is frequently practiced for connecting rods in which a steel material is used, e.g., sintered steel, carbon steel, microalloyed steel, or carburized steel, it has not been much adopted for titanium-alloy connecting rods. The reason is that high toughness of titanium alloys makes it difficult for titanium-alloy connecting rods to accept the fracture technique, which requires brittle fracture. Therefore, techniques for suitably producing fracture split-type titanium-alloy connecting rods are far from being adequately established, and improvements in various characteristics of fracture split-type titanium-alloy connecting rods are desired. In particular, there is a desire for further improvements in the reproducibility of roundness concerning the inner diameter of the big end (called "reassemblability") when mounted on a crankshaft.

JP2006-308027 (YAMAHA MOTOR CO LTD) describes a method of fracture splitting a big end of a titanium alloy connecting rod in which a protruding portion of a horizontally movable slider is placed in a crank pin hole of the big end of the connecting rod. A wedge is inserted between opposing ends of the projecting portion
of the slider using a weight. Accordingly, the big end of the connecting rod is split into a rod portion and a cap portion along the fracture surface. A similar arrangement is also described in JP2005-188741.

US4970783 teaches of splitting a titanium connecting rod. The method comprises inserting an expandable mandrel into a crank opening of the connecting rod. The mandrel comprises two oppositely acting crescent-shaped members, each respectively provided with a semi-circular surface that can engage only that portion of the wall which lies on one side of a fracture plane. A wedge is forced between the members using an actuator operating through a column assembly attached to an extension of the wedge via a coupling, such that the wedge moves the members outwardly radially perpendicular to the plane of cracking.

At least one embodiment of at least one aspect of the present invention has been made in view of the above problems, and an objective thereof is to provide a fracture-split type titanium-alloy connecting rod exhibiting good reassemblability and a production method thereof. It is an object of at least one embodiment of at least one aspect of the present invention to obviate or at least mitigate one or more problems or disadvantages in the prior art.

### SUMMARY OF INVENTION

Various aspects of the present invention are defined in the independent claims. Some preferred features are defined in the dependent claims.

According to a first aspect of the present invention there is provided a connecting rod for an internal combustion engine of a straddle-type vehicle, the connecting rod being of a split type being made of a titanium alloy, the connecting rod comprising:
a rod main body;
a small end provided at one end of the rod main body; and
a big end provided at another end of the rod main body;
the big end being fracture-split into a rod portion continuing from the other end of the rod main body, and a cap portion for coupling to the rod portion with a bolt or fixing member, wherein
the rod portion and/or the cap portion include at least one rising or protruding portion protruding from an edge of a fractured surface, each rising or protruding portion having a height that is greater than the level differences of the minute ruggednesses on the fractured surface, the at least one rising or protruding portion having a height of 0.4 mm or more; wherein
the at least one rising or protruding portion includes a rising or protruding portion protruding from the edge of a thrust surface of the big end, and/or wherein
the big end has a bolt hole or fixing hole in which the bolt or fixing member is to be screwed, located or fixed, and the at least one rising or protruding portion includes a rising or protruding portion located in a neighbourhood of, toward, proximate or adjacent the bolt hole or fixing hole.

The at least one rising or protruding portion may comprise plural rising portions. The rod portion and the cap portion may each include plural rising portions.

The rod portion and/or the cap portion may comprise at least one recess and/or engaging portion, which may be of a complimentary and/or cooperating shape to the at least one rising or protruding portion of the other of the cap portion and/or rod portion, and may be configured to receive, cooperate with or interlock with the at least one rising or protruding portion of the other of the cap portion and/or rod portion.

The thrust surface of the big end may have a recess in a neighbourhood of, adjacent or proximate the fractured surface.

The at least one rising portion may have a substantially triangular cross-sectional shape.

The at least one rising portion may have an inner side face and an outer side face. The inner side face may constitute or define an angle of not less than 20° and not more than 70° with the fractured surface.

The titanium alloy may be or comprise an alloy of titanium with aluminium and/or iron, such as Ti-5Al-1Fe alloy.

The connecting rod may further comprise a nitride layer, such as a chromium nitride layer, formed on at least part of a surface thereof.

An internal combustion engine for a straddle-type vehicle according to a second aspect of the present invention comprises a connecting rod of the above construction, i.e. according to the first aspect of the present invention.

An automotive vehicle, comprises a straddle-type or saddle-ride vehicle, according to a third aspect of the present invention comprises an internal combustion engine of the above construction, i.e. according to the second aspect.

Described herein by way of example only is a production method for a connecting rod, the method comprising: step (a) of providing a connecting rod made of or comprising a titanium alloy. The connecting rod may include: a rod main body, a small end, and/or a big end. The method may comprise a step (b) of fracture-splitting the big end of the connecting rod into a rod portion and a cap portion, e.g. so as to form fractured surfaces on each of the rod portion and cap portion. Step (b) may be conducted so that the rod portion and/or the cap portion include at least one rising or protruding portion protruding from an edge of the fractured surface.

The production method for a connecting rod may further comprise, after step (b), step (c) of forming a nitride layer, such as a chromium nitride layer, on at least part or all of a surface of the connecting rod.

In one example, step (a) may comprise step (d) of shaping the titanium alloy via forging. Step (c) may be conducted while the surface of the connecting rod may be at least partly a surface as forged.

Step (c) may be conducted with the cap portion being coupled to the rod portion with at least one bolt or fixing member.

Step (a) may comprise: step (d) of shaping the titanium alloy via forging; and step (e) of, after step (d), removing α case having occurred on a surface of the titanium alloy by shot peening. α case may be an oxygen-concentrated layer which may unfavorably affect processibility, ductility, fatigue characteristics, and so on.

In a connecting rod according to an embodiment of the present invention, the rod portion and/or the cap portion may include at least one rising or protruding portion protruding from the edge of the fractured surface, whereby the connecting rod may have an improved assemblability, and the reproducibility of roundness of the inner diameter of the big end (reassemblability) when mounted on a crankshaft may be improved.

It is preferable that the at least one rising or protruding portion of the rod portion and/or the cap portion may include a rising portion in the neighbourhood of, toward, proximate or adjacent a thrust surface of the big end.

It is also preferable that the at least one rising or protruding portion of the rod portion and/or the cap portion may include a rising or protruding portion in the neighbourhood of, toward, proximate or adjacent a bolt or fixing hole.

The at least one rising or protruding portion may be, or comprise, plural rising or protruding portions. From the standpoint of further enhancement in reassemblability, it may be preferable that the rod portion and the cap portion each include plural rising or protruding portions.

When a thrust surface of the big end has a recess near the fractured surface, the rising or protruding portion may be prevented from sticking out from the thrust surface.

From the standpoint of further enhancement in reassemblability, it may be preferable that the rising or protruding portion has a height of 0.4 mm or more.

The rising or protruding portion may have a substantially triangular cross-sectional shape.

Moreover, the rising or protruding portion(s) may have an inner side face and an outer side face. The angle that the inner side face constitutes with the fractured surface may preferably be not less than 20° and not more than 70°. If the angle of the inner side face relative to the fractured surface is less than 20°, sufficient improvements in reassemblability may not be attained (i.e., the roundness of the big end may not be sufficiently improved). If the angle which the inner side face constitutes with the fractured surface exceeds 70°, the assembling direction of the cap portion and the rod portion during mounting onto an engine may become limited, thus detracting from assemblability.

Ti-5Al-1Fe alloy may, for example be suitably used as the titanium alloy which is the material of the connecting rod. Ti-5Al-1Fe alloy may excel in the balance between processibility and strength.

The connecting rod may further include a nitride layer, such as a chromium nitride layer, on at least part or all of the surface thereof. By forming a chromium nitride layer, gaps on the surface of the big end that exist in the neighbourhood of, proximate or adjacent the fractured surface (which may be formed as fractions become lost during fracture split) may be buried with the nitride layer, e.g. chromium nitride layer, whereby misalignment during assembly may be better suppressed.

The connecting rod may have good reassemblability, and therefore may be suitably used in various internal combustion engines (engines) for automotive vehicles, such as straddle-type or saddle-ride vehicles, and other mechanical applications.

In a production method for a connecting rod according to an embodiment of the present invention, step (b) of fracture-splitting the big end of the connecting rod into a rod portion and a cap portion may be conducted so that the rod portion and/or the cap portion include at least one rising or protruding portion protruding from the edge of the fractured surface. Therefore, the connecting rod may have an improved assemblability, and the reproducibility of roundness of the inner diameter of the big end (reassemblability) when mounted on a crankshaft may be improved.

The production method for a connecting may further include, after step (b), step (c) of forming a nitride layer, such as a chromium nitride layer, on at least part or all of the surface of the connecting rod. By performing step (c), gaps on the surface of the big end that exist in the neighbourhood of, proximate or adjacent the fractured surface (which may be formed as fractions become lost during fracture split) may be buried with the chromium nitride layer, whereby misalignment during assembly may be better suppressed.

Step (a) may include step (d) of shaping the titanium alloy via forging. By shaping the titanium alloy via forging, a connecting rod with good mechanical properties may be obtained. In the case where step (a) may include step (d), step (c) may be conducted while the surface of the connecting rod is partly a surface as forged.

In step (c), the nitride layer, e.g. the chromium nitride layer may not be formed in portions of the surface of the connecting rod where the nitride layer, e.g. the chromium nitride layer, may not need to be formed. For example, when step (c) is performed after the cap portion has been coupled to the rod portion with a bolt or fixing member, it may be possible to mask the bearing surface and the screw surface with the bolt or fixing member.

Step (a) may include step (e) of, after step (d), removing α case having occurred on the surface of the titanium alloy by shot peening. α case is an oxygen-concentrated layer which may unfavorably affects processibility, ductility, fatigue characteristics, and so on, and therefore may be preferably removed through step (e). Shot peening may also introduce residual stress to the connecting rod, thereby enhancing the strength of the connecting rod.

The method may comprise producing a connecting rod according to the first aspect.

According to an embodiment of the present invention, there may be provided a fracture-split type titanium-alloy connecting rod exhibiting good reassemblability and a production method thereof.

These general and specific aspects may be implemented using a system, a method, and a computer program, and any combination of systems, methods, and computer programs.

Additional benefits and advantages of the disclosed embodiments will be apparent from the specification and Figures. The benefits and/or advantages may be individually provided by the various embodiments and features of the specification and drawings disclosure, and need not all be provided in order to obtain one or more of the same.

It will be appreciated that features analogous to those described in relation to any of the above aspects may be individually and separably or in combination applicable to any of the other aspects.

Apparatus features analogous to, or configured to implement, those described above in relation to a method and method features analogous to the use and fabrication of those described above in relation to an apparatus are also intended to fall within the scope of the present invention.

### BRIEF DESCRIPTION OF DRAWINGS

An embodiment of the present invention will now be described, by way of example only, with reference to the accompanying drawings, which are:
- **Figure 1A**: a plan view showing the entire connecting rod 1;
- **Figure 1B**: a partially cutaway plan view showing the neighbourhood of a big end 30 of the connecting rod 1;
- **Figures 2A and 2B**: plan views showing a rod portion 33 and a cap portion
- **Figures 3A and 3B**: 34, respectively, as viewed from a fractured surface F; cross-sectional views respectively taken along line 3A-3A' and line 3B-3B' in Figures 2A and 2B, which schematically show cross-sectional structures of the rod portion 33 and the cap portion 34 in the neighbourhood of a thrust surface 30t and in the neighbourhood of a bolt hole 32;
- **Figure 4A**: a plan view showing the entire connecting rod 1;
- **Figure 4B**: a cross-sectional view taken along line 4B-4B' in Figure 4A, shows a cross-sectional structure of the big end 30 (the rod portion 33 and the cap portion 34) in the neighbourhood of a thrust surface 30t;
- **Figure 5**: a diagram showing a fracture split technique;
- **Figure 6**: a diagram showing an exemplary fracture split technique that can suitably form rising portions SP;
- **Figure 7**: a diagram showing another exemplary fracture split technique that can suitably form rising portions SP;
- **Figure 8(a)**: a view of the cap portion 34 having rising portions SP formed thereon as taken from the fractured surface F side;
- **Figure 8(b) and Figure 8(c)**: are views of the cap portion 34 having rising portions SP formed thereon showing enlarged a neighbourhood region 8B of a thrust surface 30t and a neighbourhood region 8C of a bolt hole 32, respectively, in Figure 8(a);
- **Figure 8(d) and Figure 8(e)**: are illustrations of micrographs showing cross sections of the cap portion 34 having rising portions SP formed thereon taken along line 8D-8D' and line 8E-8E' in Figure 8(b) and Figure 8(c), respectively;
- **Figure 9**: a view of the neighbourhood of a thrust surface 30t of the rod portion 33 and the cap portion 34 having rising portions SP formed thereon, as taken from the fractured surface F side;
- **Figure 10**: a diagram schematically showing themechanism by which a rising portion SP is formed;
- **Figure 11A**: a graph showing a result (relationship between elapsed time and stress) of measuring stress on a thrust surface 30t during fracture split, as measured with a strain gauge;
- **Figure 11B**: a view showing two regions R1 and R2 which were subjected to the stress measurement;
- **Figure 12**: a graph showing a result of measuring nanoindentation hardness (HV) with respect to rising portions SP and other portions (base metal);
- **Figure 13**: a cross-sectional view schematically showing an engine 100 including a connecting rod 1 according to an embodiment of the present invention;
- **Figure 14**: a side view schematically showing a motorcycle including the engine 100 shown in Figure 13.

### DETAILED DESCRIPTION OF DRAWINGS

Hereinafter, with reference to the drawings, embodiments of the present invention will be described. Note that the present invention is not limited to the following embodiments.

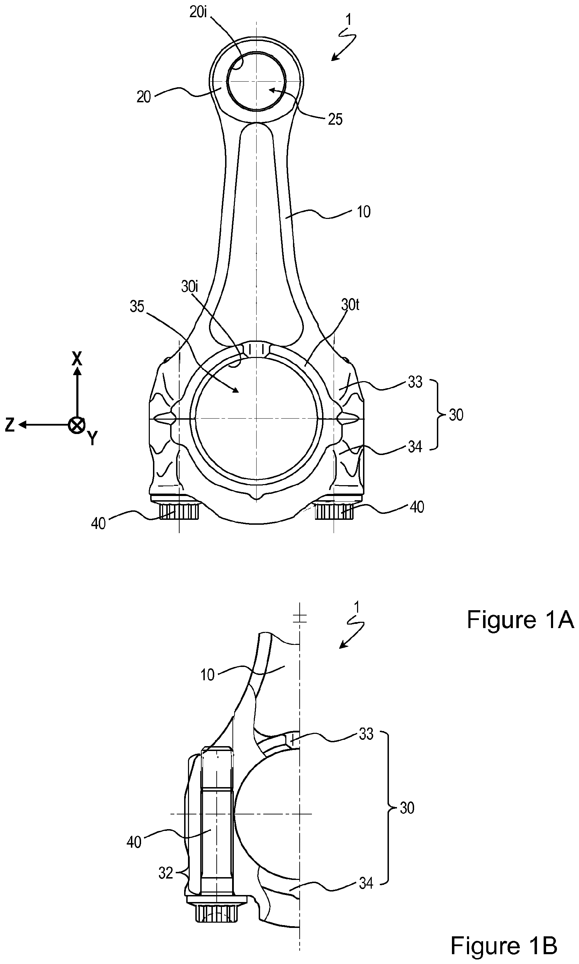

Figure 1 shows a connecting rod 1 according to an embodiment of the present invention. Figure 1A is a plan view showing the entire connecting rod 1; and Figure 1B is a partially cutaway plan view showing the neighbourhood of a big end 30 of the connecting rod 1.

The connecting rod 1 is made of a titanium alloy. As the titanium alloy, Ti-5AI-1Fe alloy can be suitably used, for example. Ti-5Al-1Fe alloy is a titanium alloy containing about 5 mass% of Al and about 1 mass% of Fe. Moreover, Ti-5Al-1Fe alloy excels in the balance between processibility and strength. It will be appreciated that the material of the connecting rod 1 is not limited to Ti-5Al-1Fe alloy, but titanium alloys of various known compositions can be used (e.g., Ti-6AI-4V alloy, which is a titanium alloy containing about 6 mass % aluminium and about 4 mass % vanadium).

As shown in Figures 1A and 1B, the connecting rod 1 includes a bar-like rod main body 10, a small end 20 provided at one end of the rod main body 10, and a big end 30 provided at another end of the rod main body 10.

The small end 20 has a throughhole (called a "piston pin hole") 25 for allowing a piston pin to extend therethrough. The piston pin hole 25 is defined by an inner peripheral surface 20i of the small end 20. On the other hand, the big end 30 has a throughhole (called a "crankpin hole") 35 for allowing a crankpin to extend therethrough. The crankpin hole 35 is defined by an inner peripheral surface 30i of the big end 30.

In the following description, the direction in which the rod main body 10 extends will be referred to as "the longitudinal direction" (i.e., direction X in the figure), and the direction of a center axis of the piston pin hole 25 and the crankpin hole 35 will be referred to as the "axial direction" (i.e., direction Y in the figure). The direction which is orthogonal to the longitudinal direction and the axial direction will be referred to as the "width direction" (direction Z in the figure).

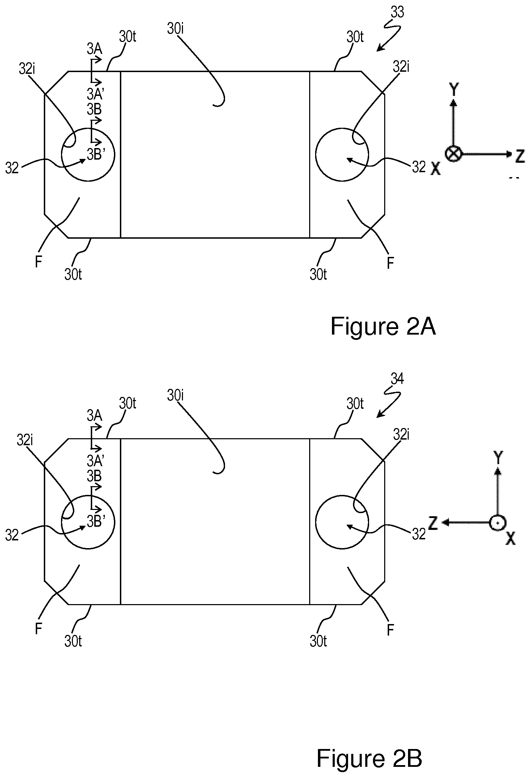

The big end 30 is fracture-split into a rod portion 33 which continues from the other end of the rod main body 10, and a cap portion 34 which is coupled to the rod portion 33 with bolts 40. In other words, the connecting rod 1 is a fracture split-type connecting rod. Figures 2A and 2B are plan views showing the rod portion 33 and the cap portion 34, respectively, as viewed from a fractured surface F. As shown in Figure 1B and Figures 2A and 2B, the big end 30 has bolt holes 32 to allow the bolts 40 to be screwed into bolt holes 32, as shown in Figures 1A and 1B. The fractured surfaces F of the rod portion 33 and the cap portion 34 have minute ruggednesses.

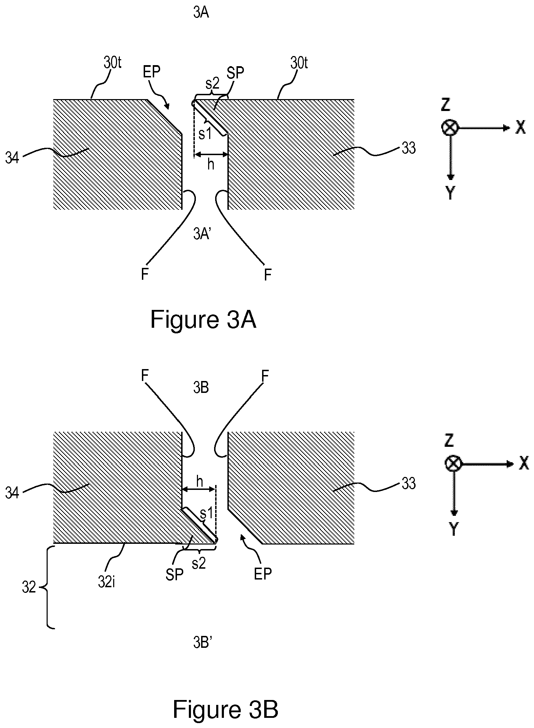

Now, with reference to Figure 3, the structures of the rod portion 33 and the cap portion 34 in the neighbourhood of the thrust surface 30t and in the neighbourhood of a bolt hole 32 will be described. Figures 3A and 3B, which respectively are cross-sectional views taken along line 3A-3A' and line 3B-3B' in Figures 2A and 2B, schematically show cross-sectional structures of the rod portion 33 and the cap portion 34 in the neighbourhood of a thrust surface 30t and in the neighbourhood of a bolt hole 32. For ease of understanding, Figures 3A and 3B illustrate the rod portion 33 and the cap portion 34 as being slightly parted.

As shown in Figures 3A and 3B, the rod portion 33 and the cap portion 34 have at least one rising portion (protrusion) SP protruding from the edge of their fractured surface F.

In the example shown in Figure 3A, the rod portion 33 has a rising portion SP in the neighbourhood of the thrust surface 30t of the big end 30, whereas the cap portion 34 has an engaging portion (recess) EP that engages with the rising portion SP of the rod portion 33.

In the example shown in Figure 3B, on the other hand, the cap portion 34 has a rising portion SP in the neighbourhood of a bolt hole 32, whereas the rod portion 33 has an engaging portion EP that engages with the rising portion SP of the cap portion 34.

The rising portions SP are formed during fracture split of the big end 30. Each rising portion SP has a height h which is greater than the level differences of the minute ruggednesses on the fractured surface F. Each rising portion SP typically has a substantially triangular cross-sectional shape (Figures 3A and 3B illustrate those shaped as substantially right angled triangles).

Each rising portion SP has an inner side face s1 and an outer side face s2. In the case of a rising portion SP in the neighbourhood of the thrust surface 30t (see Figure 3A), the inner side face s1 is a side face opposite from the thrust surface 30t, whereas the outer side face s2 is a side face at the thrust surface 30t (i.e., a side face which is continuous with the thrust surface 30t). In the case of a rising portion SP in the neighbourhood of a bolt hole 32 (see Figure 3B), the inner side face s1 is a side face opposite from the inner peripheral surface 32i of the bolt hole 32, whereas the outer side face s2 is a side face at the inner peripheral surface 32i of the bolt hole 32 (i.e., a side face which is continuous with the inner peripheral surface 32i of the bolt hole 32).

The angle (i.e. the smaller or inner angle) which the inner side face s1 of the rising portion SP constitutes with, or slopes from the plane of, the fractured surface F is preferably not less than 20° and not more than 70° (Figures 3A and 3B illustrate a case of substantially 45°), as will be described later. The angle which the outer side face s2 of the rising portion SP constitutes with the fractured surface F is typically not less than 60° and not more than 120° (Figures 3A and 3B illustrate a case of substantially 90°).

Although Figure 3A illustrates an exemplary construction where a rising portion SP is provided on the rod portion 33 in the neighbourhood of the thrust surface 30t, embodiments of the present invention are not limited to this construction. In the neighbourhood of the thrust surface 30t, a rising portion(s) SP may be provided on the cap portion 34. Furthermore, in the neighbourhood of the thrust surface 30t, regions in which rising portions SP are provided on the rod portion 33 and regions in which rising portions SP are provided on the cap portion 34 may be mixedly present. Also, in the neighbourhood of the thrust surface 30t, regions in which rising portions SP are provided on neither the rod portion 33 nor the cap portion 34 may exist.

Although Figure 3B illustrates an exemplary construction where a rising portion SP is provided on the cap portion 34 in the neighbourhood of a bolt hole 32, embodiments of the present invention are not limited to this construction. In the neighbourhood of a bolt hole 32, a rising portion(s) SP may be provided on the rod portion 33. Furthermore, in the neighbourhood of a bolt hole 32, regions in which rising portions SP are provided on the rod portion 33 and regions in which rising portions SP are provided on the cap portion 34 may be mixedly present. Also, in the neighbourhood of a bolt hole 32, regions in which rising portions SP are provided on neither the rod portion 33 nor the cap portion 34 may exist.

Moreover, it is not necessary that each of the rod portion 33 and the cap portion 34 includes a rising portion(s) SP. It may only be the rod portion 33 that includes the rising portion(s) SP; it may only be the cap portion 34 that includes the rising portion(s) SP; or both of the rod portion 33 and the cap portion 34 may include a rising portion (s).

As described above, in the connecting rod 1 according to an embodiment of the present invention, the rod portion 33 and/or the cap portion 34 include at least one rising portion SP protruding from the edge of the fractured surface. Since the rod portion 33 and/or the cap portion 34 include a rising portion(s) SP in addition to the minute ruggednesses of the fractured surface F, the connecting rod 1 has an improved assemblability, and the reproducibility of roundness concerning the inner diameter of the big end 30 (reassemblability) when mounted on a crankshaft is improved.

There is no particular limitation as to the height h of each rising portion SP. From the standpoint of further enhancement in reassemblability, the rising portion(s) SP has a height of preferably 0.4 mm or more, and more preferably 0.6 mm or more.

It is also preferable that the angle of the inner side face s1 of the rising portion SP relative to the fractured surface F is not less than 20° and not more than 70°. If the angle of the inner side face s1 relative to the fractured surface F is less than 20°, sufficient improvements in reassemblability may not be attained (i.e., the roundness of the big end 30 may not be sufficiently improved). If the angle of the inner side face s1 relative to the fractured surface F exceeds 70°, the assembling direction of the cap portion 34 and the rod portion 33 during mounting onto an engine may become limited, thus detracting from assemblability.

As has already been described, a reassemblability improvement effect will be obtained when at least one of the rod portion 33 and the cap portion 34 includes at least one rising portion SP. However, from the standpoint of further enhancement in reassemblability, it is preferable that the rod portion 33 and the cap portion 34 each include plural rising portions SP.

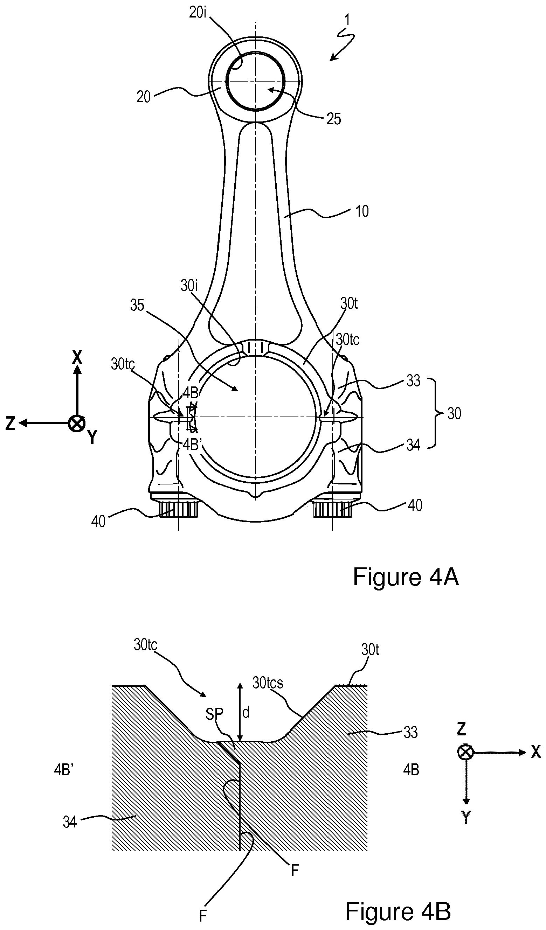

Figure 4 shows another construction for the connecting rod 1 according to an embodiment of the present invention. Figure 4A is a plan view showing the entire connecting rod 1. Figure 4B, which is a cross-sectional view taken along line 4B-4B' in Figure 4A, shows a cross-sectional structure of the big end 30 (the rod portion 33 and the cap portion 34) in the neighbourhood of a thrust surface 30t.

In the construction shown in Figures 4A and 4B, the thrust surface 30t of the big end 30 has a recess 30tc in the neighbourhood of the fractured surface F. In the case where the thrust surface 30tc does not have a recess 30tc, a rising portion SP formed during fracture split of the big end 30 may stick out from the thrust surface 30. On the other hand, if the thrust surface 30t has a recess 30tc in the neighbourhood of fractured surface F, such a rising portion SP is prevented from sticking out from the thrust surface 30tc. The depth d of the recess 30tc is not less than 0.9 mm and not more than 1.5 mm, for example. Moreover, the angle of the side face 30tcs of the recess 30tc relative to the thrust surface 30t is more than 0° but equal to or less than 60°, for example.

Next, a production method for the connecting rod 1 according to an embodiment of the present invention will be described.

The connecting rod 1 can be produced by a production method which includes: a step (providing step)(a) of providing a connecting rod 1 which is made of a titanium alloy and which includes a rod main body 10, a small end 20, and a big end 30; and a step (fracture split step)(b) of fracture-splitting the big end 30 of the connecting rod 1 into a rod portion 33 and a cap portion 34. The fracture split step (b) is executed so that the rod portion 33 and/or the cap portion 34 have at least one rising portion SP protruding from an edge of a fractured surface F. The technique of suitably forming the rising portion(s) SP in the fracture split step (b) will be described in detail later.

As the titanium alloy used in the connecting rod forming step (a), Ti-5Al-1Fe alloy as mentioned above can be suitably used. Titanium alloys of various other compositions may also be used.

After the fracture split step (b), a step (CrN layer forming step)(c) of forming a chromium nitride layer on at least part of the surface of the connecting rod 1 may be performed. By performing the CrN layer forming step (c), gaps on the surface of the big end 30 that exist in the neighbourhood of fractured surface F (which may be formed as fractions become lost during fracture split) are buried with the chromium nitride layer, whereby misalignment during assembly can be better suppressed.

The providing step (a) may include a step (forging step)(d) of shaping a titanium alloy via forging. By shaping a titanium alloy via forging, a connecting rod 1 with good mechanical properties can be obtained. In the case where the providing step (a) includes the forging step (d), the CrN layer forming step (c) may be conducted while the surface of the connecting rod 1 is partly a surface as forged.

Note that, in the CrN layer forming step (c), the chromium nitride layer may not be formed in portions of the surface of the connecting rod 1 where the chromium nitride layer does not need to be formed. For example, when the CrN layer forming step (c) is performed after the cap portion 34 has been coupled to the rod portion 33 with the bolts 40, it is possible to mask the bearing surfaces and screw surfaces with the bolts 40.

Moreover, the providing step (a) may include a step of removing any α case that has occurred on the surface of the titanium alloy by shot peening (shot peening step)(e), after the forging step (d). α case is an oxygen-concentrated layer which unfavorably affects processibility, ductility, fatigue characteristics, and so on, and therefore is preferably removed through the shot peening step (e). Shot peening can also introduce residual stress to the connecting rod 1, thereby enhancing the strength of the connecting rod 1.

Next, a technique for suitably forming a rising portion(s) SP in the fracture split step (b) will be described. The inventors have conducted a detailed study concerning the relationship between the various conditions in fracture-splitting the big end 30 and the shape of the resultant fractured surface F. It was thus found that, by minimizing the bending stress components in the neighbourhood of the thrust surface 30t and in the neighbourhood of the bolt holes 32 during fracture split, it becomes possible to suitably form a rising portion(s) SP in the neighbourhood of the thrust surface 30t and in the neighbourhood of the bolt holes 32. Hereinafter, the findings which the inventors obtained through their study will be described.

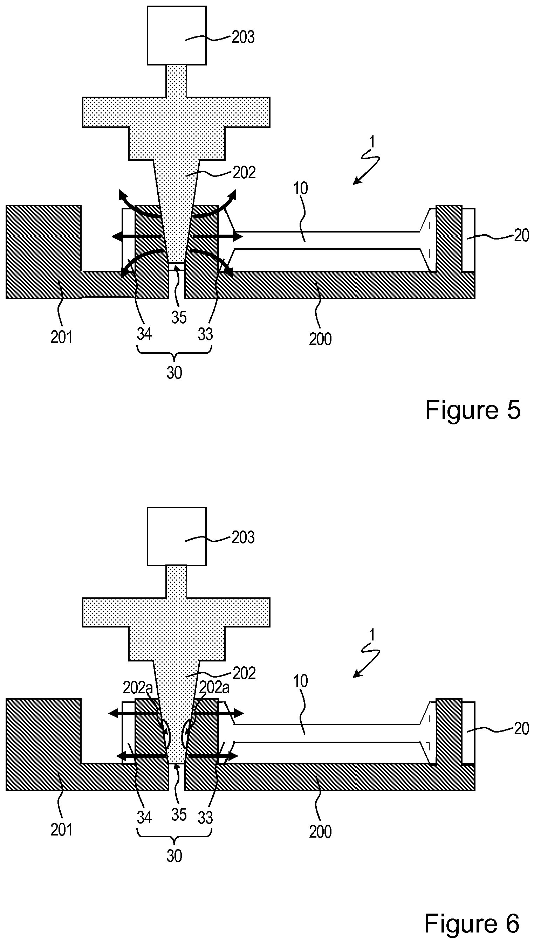

Figure 5 shows a fracture split technique disclosed in Patent Document 2. In the technique shown in Figure 5, while protrusions of sliders 200 and 201 that are capable of moving along the horizontal direction are placed in the crankpin hole 35 of the big end 30 of the connecting rod 1, a wedge jig 202 is driven in between the protrusions of the sliders 200 and 201 by means of a weight 203. As a result, the big end 30 of the connecting rod 1 becomes split into the rod portion 33 and the cap portion 34, beginning from a fracture beginning trench (which is formed on the inner peripheral surface 30i of the big end 30). However, in this technique, the wedge jig 202 is uniformly pressed against the protrusions of the sliders 200 and 201 (i.e., the areas of contact between the wedge jig 202 and the protrusions of the sliders 200 and 201 are large), so that large bending stress components will occur in the neighbourhood of the thrust surface 30t and in the neighbourhood of the bolt holes 32. Therefore, the rising portion(s) SP cannot be suitably formed.

On the other hand, as shown in Figure 6, when recesses 202a are formed on the side faces of the wedge jig 202 (i.e., the areas of contact between the wedge jig 202 and the protrusions of the sliders 200 and 201 are reduced), the bending stress components in the neighbourhood of the thrust surface 30t and in the neighbourhood of the bolt holes 32 can be reduced, whereby the rising portion(s) SP can be suitably formed.

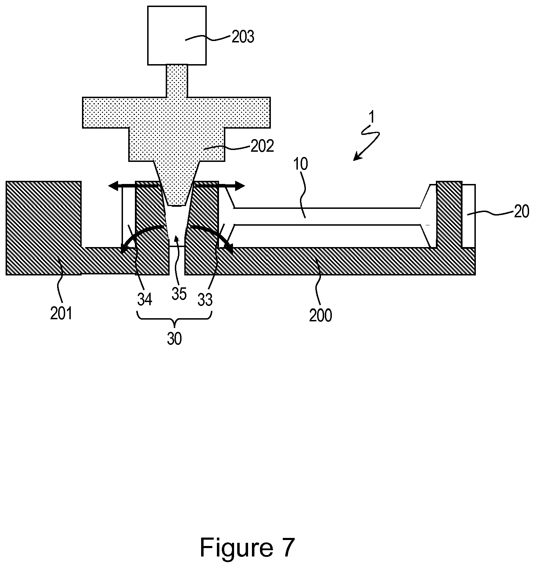

Moreover, as shown in Figure 7, the wedge jig 202 may be allowed to come in contact with the protrusions of the sliders 200 and 201 only in its upper portion, the bending stress component in the neighbourhood of one of the two thrust surfaces 30t of the big end 30 (appearing as the upper thrust surface 30t in Figure 7) can be reduced, the rising portion(s) SP can be suitably formed in the neighbourhood of that thrust surface 30t. A sufficient effect of reassemblability improvement is obtained by forming a rising portion(s) SP in the neighbourhood of one of the thrust surfaces 30t.

Thus, by conducting fracture split with the technique shown in Figure 6 or Figure 7 for example, the bending stress components in the neighbourhood of the thrust surface 30t and in the neighbourhood of the bolt holes 32 can be reduced, whereby a rising portion(s) SP can be suitably formed in the neighbourhood of the thrust surface 30t and in the neighbourhood of the bolt hole 32.

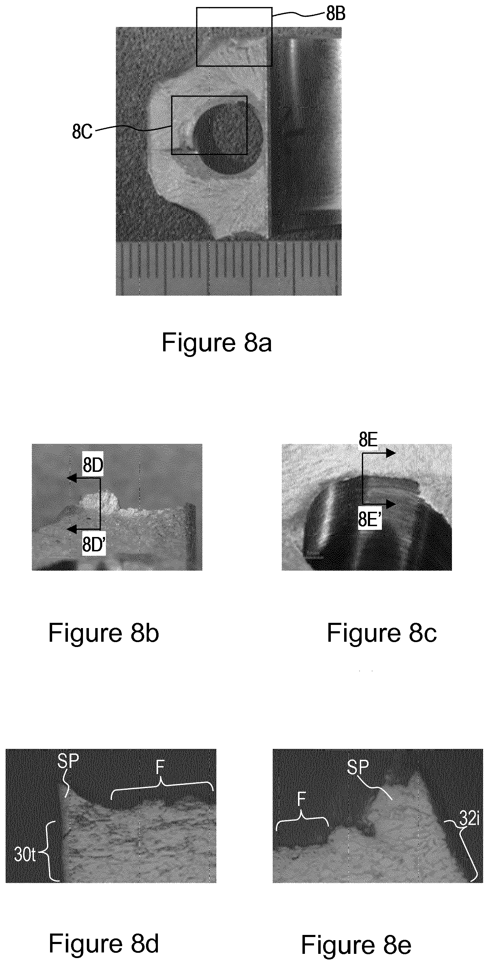

Figure 8 shows a photograph of a cap portion 34 with rising portions SP actually formed thereon. Figure 8(a) is a photograph of the cap portion 34 as taken from the fractured surface F side. Figure 8(b) and Figure 8(c) are photographs showing enlarged a neighbourhood region 8B of a thrust surface 30t and a neighbourhood region 8C of a bolt hole 32, respectively, in Figure 8(a). Figure 8(d) and Figure 8(e) are optical micrographs showing cross sections taken along line 8D-8D' and line 8E-8E' in Figure 8(b) and Figure 8(c), respectively.

From Figure 8, (a) to (e) (in particular, (d) and (e) of Figure 8), it can be seen that rising portions SP whose height is greater than the level differences of the minute ruggednesses of the fractured surface F are created in the neighbourhood of the thrust surface 30t and in the neighbourhood of the bolt hole 32 (in the neighbourhood of the inner peripheral surface 32i of the bolt hole 32).

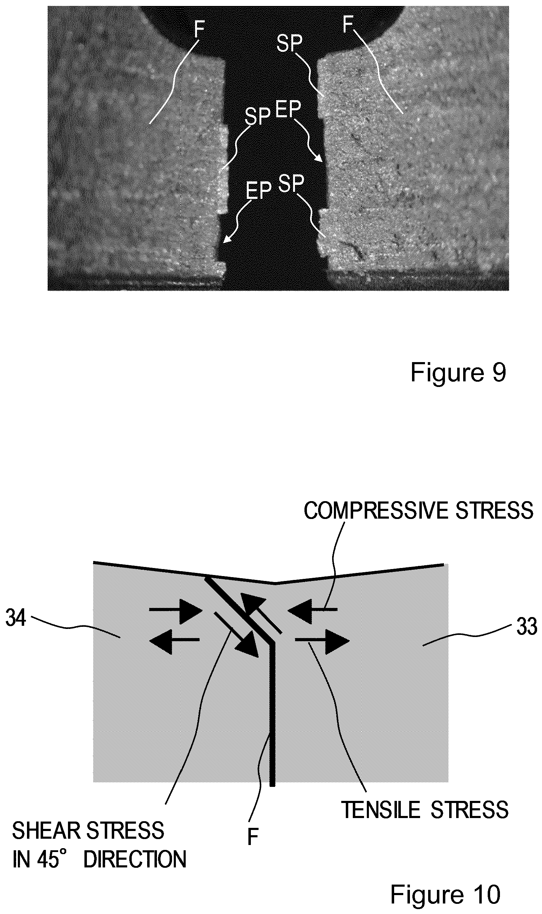

Figure 9 shows a photograph of the neighbourhood of a thrust surface 30t of the rod portion 33 and the cap portion 34 having rising portions SP actually formed thereon, as taken from the fractured surface F side. It can be seen from Figure 9 that rising portions SP are formed in the neighbourhood of the thrust surface 30t. It can also be seen that, for each rising portion SP on one of the rod portion 33 and the cap portion 34, an engaging portion EP is formed in a corresponding region of the other.

Figure 10 schematically shows the mechanism by which rising portions SP are formed. As shown in Figure 10, when the big end 30 is fracture-split into the rod portion 33 and the cap portion 34, the compressive stress due to bending and the tensile stress acting in the material prior to fracture cancel out each other at the outermost surface. Thus makes it presumable that the neighbourhood of the outermost surface is fractured with shear stress in the 45° direction, whereby rising portions SP are formed.

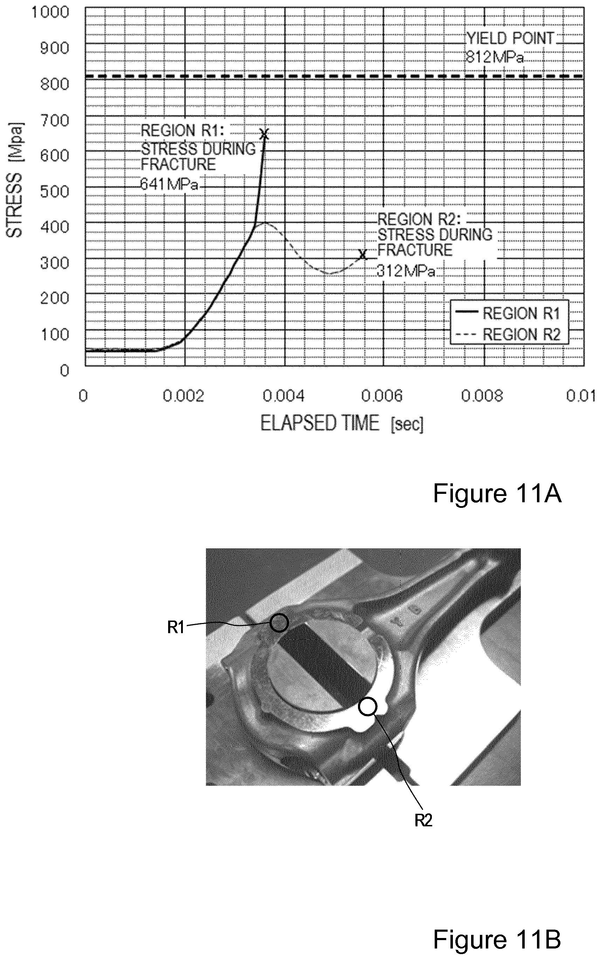

Figure 11A shows a result (relationship between elapsed time and stress) of measuring stress on a thrust surface 30t during fracture split, as measured with a strain gauge. This stress measurement was performed in the two regions R1 and R2 shown in Figure 11B.

As can be seen from Figure 11A, the stress on the thrust surface 30t does not exceed the yield point (812 MPa) prior to fracture, in either of the two regions R1 and R2. Thus, it is presumable that the fracture emanates from shear stress.

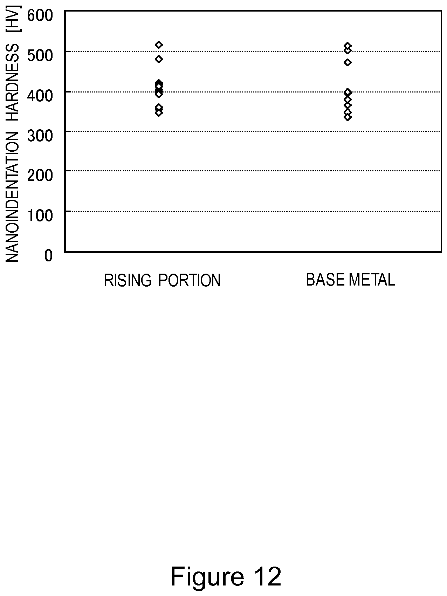

Figure 12 shows a result of measuring nanoindentation hardness (HV) with respect to rising portions SP and other portions (base metal). As can be seen from Figure 12, the rising portions SP have essentially the same hardness as that of the base metal. From Figure 8 (d) and (e), which have already been referred to, it can be seen that the rising portions SP have essentially the same metallographical structure as that of the other portions, indicative of absence of plastic flow. Thus, there is no evidence of plastic deformation in the rising portions SP.

The rising portions SP are formed by the aforementioned mechanism; thus, it is considered that the rising portions SP can be suitably formed in the neighbourhood of the thrust surface 30t and in the neighbourhood of the bolt hole 32 by minimizing the bending stress components in the neighbourhood of the thrust surface 30t and in the neighbourhood of the bolt holes 32 (that is, only so much bending stress as will be canceled out by tensile stress is allowed to be generated) during fracture split.

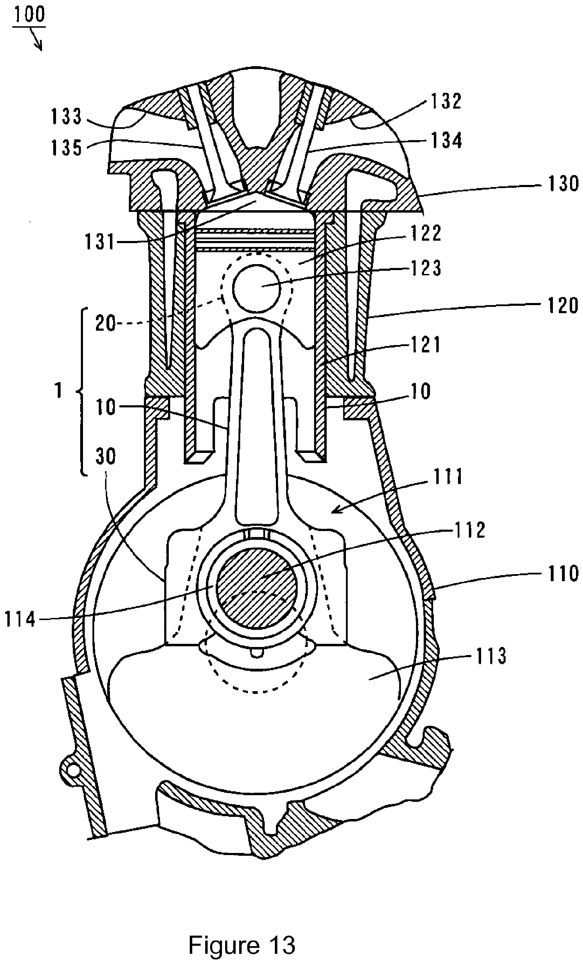

As described above, the connecting rod 1 according to an embodiment of the present invention has an improved assemblability, and the reproducibility of roundness concerning the inner diameter of the big end 30 (reassemblability) when mounted on a crankshaft is improved. Therefore, the connecting rod 1 according to an embodiment of the present invention is widely used in various internal combustion engines (engines) for automotive vehicles or other mechanical applications. Figure 13 shows an example of an engine 100 including a connecting rod 1 which has been produced by the production method according to the present embodiment.

The engine 100 includes a crankcase 110, a cylinder block 120, and a cylinder head 130.

A crankshaft 111 is accommodated in the crankcase 110. The crankshaft 111 has a crankpin 112 and a crank arm 113.

A cylinder block 120 is provided above the crankcase 110. A piston 122 is allowed to reciprocate inside the cylinder bore.

A cylinder head 130 is provided above the cylinder block 120. In conjunction with the cylinder block 120 and the piston 122, the cylinder head 130 defines a combustion chamber 131. An intake valve 134 for supplying vapor to the interior of the combustion chamber 131 is provided within the intake port 132, and an exhaust valve 135 for enabling evacuation of the combustion chamber 131 is provided within the exhaust port 133.

The piston 122 and the crankshaft 111 are linked via the connecting rod 1. Specifically, a piston pin 123 of the piston 122 is inserted in the throughhole (piston pin hole) of the small end 20 of the connecting rod 1, and the crankpin 112 of the crankshaft 111 is inserted in the throughhole (crankpin hole) of the big end 30, thus linking the piston 122 and the crankshaft 111 together. A bearing metal 114 is provided between the inner peripheral surface of the throughhole of the big end 30 and the crankpin 112.

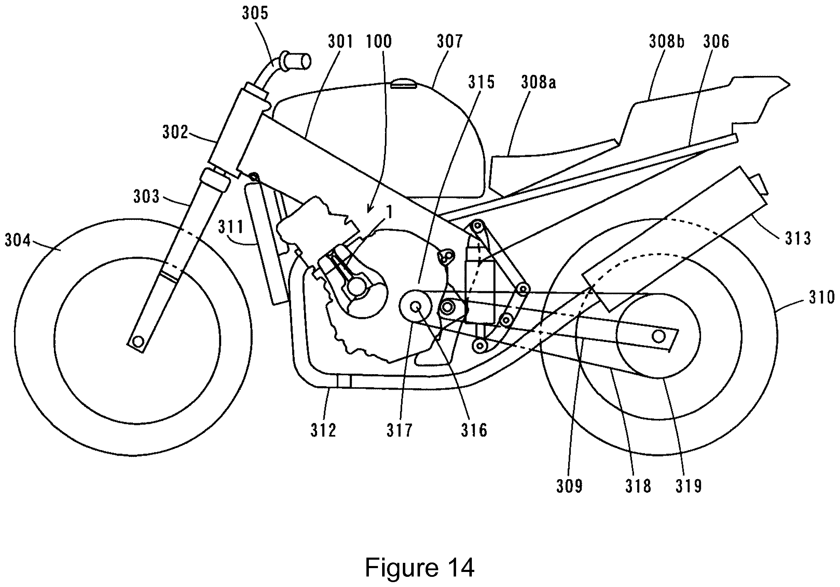

Figure 14 shows a motorcycle which incorporates the engine 100 shown in Figure 13. In the motorcycle shown in Figure 14, a head pipe 302 is provided at the front end of a body frame 301. To the head pipe 302, front forks 303 are attached so as to be capable of swinging in the right-left direction of the vehicle. At the lower end of the front forks 303, a front wheel 304 is supported so as to be capable of rotating.

A seat rail 306 is attached at an upper portion of the rear end of the body frame 301 so as to extend in the rear direction. A fuel tank 307 is provided on the body frame 301, and a main seat 308a and a tandem seat 308b are provided on the seat rail 306.

Rear arms 309 extending in the rear direction are attached to the rear end of the body frame 301. At the rear end of the rear arms 309, a rear wheel 310 is supported so as to be capable of rotating.

At the central portion of the body frame 301, the engine 100 shown in Figure 13 is held. The engine 100 incorporates the connecting rod 1 of the present embodiment. A radiator 311 is provided in front of the engine 100. An exhaust pipe 312 is connected to an exhaust port of the engine 100, and a muffler 313 is attached to the rear end of the exhaust pipe 312.

A transmission 315 is linked to the engine 100. Driving sprockets 317 are attached on an output axis 316 of the transmission 315. Via a chain 318, the driving sprockets 317 are linked to rear wheel sprockets 319 of the rear wheel 310. The transmission 315 and the chain 318 function as a transmitting mechanism for transmitting the motive power generated in the engine 100 to the driving wheel.

The connecting rod 1 according to an embodiment of the present invention has a high reproducibility of roundness concerning the inner diameter of the big end 30 (reassemblability) when mounted on the crankshaft 111. Therefore, the roundness of the big end 30 during operation of the engine 100 is improved, thus providing an improved anti-sticking property. Since this lowers the rigidity level that is required of the big end 30, weight reduction by making the big end 30 thin becomes possible. As the weight of the connecting rod 1 is reduced, the crankshaft 111, balancer, crankcase 110, and the like can also be reduced in weight, thus making possible a weight reduction of the entire engine 100 and motorcycle. Moreover, reduction in the weight of the connecting rod 1 makes for higher mileage and higher output of the engine 100.

According to an embodiment of the present invention, there is provided a fracture-split type titanium-alloy connecting rod exhibiting good reassemblability and a production method thereof. A connecting rod according to an embodiment of the present invention can be widely used in various internal combustion engines (e.g., an engine for an automotive vehicle).

While the present invention has been described with respect to exemplary embodiments thereof, it will be apparent to those skilled in the art that the disclosed invention may be modified in numerous ways and may assume many embodiments other than those specifically described above. Accordingly, it is intended by the appended claims to cover all modifications of the invention that fall within the scope of the claims.

It will be appreciated that the term straddle-type vehicle or motor vehicle or automotive vehicle used herein, and as used in the art, is meant to include the following terms also used in the art:
saddled vehicle, saddle-ride type vehicle or motor vehicle, saddle-straddling type vehicle or motor vehicle, and includes: motorcycles and motorbikes as well as motor tricycles and All Terrain Vehicles (ATVs), scooters, mopeds and snowmobiles.

## Claims

1. A connecting rod (1) for an internal combustion engine of a straddle-type vehicle, the connecting rod being of a split type being made of a titanium alloy, the connecting rod (1) comprising:
a rod main body (10);
a small end (20) provided at one end of the rod main body (10); and
a big end (30) provided at another end of the rod main body (10),
the big end (30) being fracture-split into a rod portion (33) continuing from the other end of the rod main body (10), and a cap portion (34) for coupling to the rod portion (33) with a bolt or fixing member (40), wherein
the rod portion (33) and/or the cap portion (34) include at least one rising or protruding portion (SP) protruding from an edge of a fractured surface (F), each rising or protruding portion (SP) having a height that is greater than the level differences of the minute ruggednesses on the fractured surface (F), the at least one rising or protruding portion (SP) having a height of 0.4 mm or more; wherein
the at least one rising or protruding portion (SP) includes a rising or protruding portion (SP) protruding from the edge of a thrust surface (30t) of the big end (30), and/or wherein
the big end (30) has a bolt hole or fixing hole (32) in which the bolt or fixing member (40) is to be screwed, located or fixed, and the at least one rising or protruding portion (SP) includes a rising or protruding portion (SP) located in a neighbourhood of, toward, proximate or adjacent the bolt hole or fixing hole (32).

2. The connecting rod (1) of claim 1, wherein,
the at least one rising or protruding portion (SP) comprises plural rising or protruding portions (SP); and
the rod portion (33) and the cap portion (34) each include plural rising or protruding portions (SP).

3. The connecting rod (1) of either of claims 1 or 2, wherein the thrust surface (30t) of the big end (30) has a recess (30tc) in a neighbourhood of, toward, proximate or adjacent the fractured surface (F);
and/or
the at least one rising or protruding portion (SP) has a substantially triangular cross-sectional shape.

4. The connecting rod (1) of any of claims 1 to 3, wherein,
the at least one rising or protruding portion (SP) has an inner side face (S1) and an outer side face (S2); and
the inner side face (S1) constitutes an angle of not less than 20° and not more than 70° with the fractured surface (F).

5. The connecting rod (1) of any of claims 1 to 4, wherein the titanium alloy is Ti-5AI-1 Fe alloy.

6. The connecting rod (1) of any of claims 1 to 5, further comprising a chromium nitride layer formed on at least part of a surface thereof.

7. An internal combustion engine (100) for a straddle-type vehicle, the internal combustion engine comprising the connecting rod (1) of any of claims 1 to 4.

8. An automotive vehicle comprising a straddle-type vehicle, comprising the internal combustion engine (100) of claim 7.

## Patentansprüche

1. Pleuel (1) für einen Verbrennungsmotor eines Grätschsitzfahrzeuges, wobei der Pleuel vom getrennten Typ aus Titanlegierung ist, wobei der Pleuel (1) umfasst:
einen Pleuelhauptkörper (10);
ein kleines Ende (20), welches an einem Ende des Pleuelhauptkörpers (10) bereitgestellt ist; und
ein großes Ende (30), welches am anderen Ende des Pleuelhauptkörpers (10) bereitgestellt ist,
wobei das große Ende (30) in einen Pleuelabschnitt (33), als Fortsatz des anderen Endes des Pleuelhauptkörpers (10), und in einen Lagerdeckelabschnitt (34) zum Verbinden des Pleuelabschnitts (33) mit einem Bolzen oder Befestigungsglied (40) durch Brechen gespalten ist, wobei
der Pleuelabschnitt (33) und/oder der Lagerdeckelabschnitt (34) zumindest einen steigenden oder vorstehenden Abschnitt (SP) umfassen, welcher von einem Rand einer gebrochenen Oberfläche (F) vorsteht, wobei jeder steigende oder vorstehende Abschnitt (SP) eine Höhe aufweist, welche größer als die Niveauunterschiede der feinen Aufrauhungen auf der gebrochenen Oberfläche (F) ist, wobei der zumindest eine steigende oder vorstehende Abschnitt (SP) eine Höhe von 0,4 mm oder mehr aufweist; wobei
der zumindest eine steigende oder vorstehende Abschnitt (SP) einen steigenden oder vorstehenden Abschnitt (SP) umfasst, welcher von einem Rand einer Schubfläche (30t) des großen Endes (30) vorsteht, und/oder wobei
das große Ende (30) ein Bolzenloch oder Befestigungsloch (32) aufweist, in welchem der Bolzen oder das Befestigungsglied (40) verschraubt, positioniert oder befestigt wird, und wobei der zumindest eine steigende oder vorstehende Abschnitt (SP) einen steigenden oder vorstehenden Abschnitt (SP) umfasst, welcher in der Nähe, in der Richtung, proximal oder angrenzend an das Bolzenloch oder Befestigungsloch (32) liegt.

2. Pleuel (1) nach Anspruch 1, wobei
der zumindest eine steigende oder vorstehende Abschnitt (SP) mehrere steigende oder vorstehende Abschnitt (SP) umfasst; und
der Pleuelabschnitt (33) und der Lagerdeckelabschnitt (34) jeweils mehrere steigende oder vorstehende Abschnitte (SP) umfassen.

3. Pleuel (1) nach einem der Ansprüche 1 oder 2, wobei die Schubfläche (30t) des großen Endes (30) eine Ausnehmung (30tc) in der Nähe, in der Richtung, proximal oder angrenzend an die gebrochene Oberfläche (F) aufweist;
und/oder
der zumindest eine steigende oder vorstehende Abschnitt (SP) eine im Wesentlichen dreieckige Querschnittsform aufweist.

4. Pleuel (1) nach einem der Ansprüche 1 bis 3, wobei,
der zumindest eine steigende oder vorstehende Abschnitt (SP) eine Innenseitenfläche (S1) und eine Außenseitenfläche (S2) aufweist; und
die Innenseitenfläche (S1) einen Winkel von nicht weniger als 20° und nicht mehr als 70° mit der gebrochenen Oberfläche (F) bildet.

5. Pleuel (1) nach einem der Ansprüche 1 bis 4, wobei die Titanlegierung eine Ti-5Al-1Fe Legierung ist.

6. Pleuel (1) nach einem der Ansprüche 1 bis 5, ferner umfassend eine ChromNitrid-Schicht, welche auf zumindest einem Teil seiner Oberfläche gebildet ist.

7. Verbrennungsmotor (100) für ein Grätschsitzfahrzeug, wobei der Verbrennungsmotor den Pleuel (1) nach einem der Ansprüche 1 bis 4 umfasst.

8. Kraftfahrzeug umfassend ein Grätschsitzfahrzeug, welches den Verbrennungsmotor (100) nach Anspruch 7 umfasst.

## Revendications

1. Bielle (1) pour un moteur à combustion interne d'un véhicule du type à enfourcher, la bielle étant d'un type fendu, et étant composée d'un alliage de titane, la bielle (1) comprenant :
un corps principal de bielle (10) ;
une petite extrémité (20) agencée au niveau d'une extrémité du corps principal de la bielle (10) ; et
une grande extrémité (30) agencée au niveau d'une autre extrémité du corps principal de la bielle (10) ;
la grande extrémité (30) étant divisée par fracture en une partie de tige (33) s'étendant en continu à partir de l'autre extrémité du corps principal de la bielle (10), et une partie de chapeau (34) pour accoupler la partie de tige (33) à un boulon ou un élément de fixation (40) ; dans lequel :
la partie de tige (33) et/ou la partie de chapeau (34) incluent au moins une partie montante ou en saillie (SB) débordant d'un bord d'une surface fracturée (F), chaque partie montante ou en saillie (SP) ayant une hauteur supérieure aux différences de niveau des rugosités minimes sur la surface fracturée (F), la au moins une partie montante ou en saillie (SP) ayant une hauteur de 0,4 mm ou plus, dans laquelle :
la au moins une partie montante ou en saillie (SP) inclut une partie montante ou en saillie (SP) débordant du bord d'une surface de poussée (30t) de la grande extrémité (30) ; et/ou dans laquelle :
la grande extrémité (30) comporte un trou de boulon ou un trou de fixation (32) dans lequel le boulon ou l'élément de fixation (40) doit être vissé, positionné ou fixé, la au moins une partie montante ou en saillie (SP) incluant une partie montante ou en saillie (SP) située dans le voisinage de, vers, à proximité de ou en un point adjacent au trou de boulon ou au trou de fixation (32).

2. Bielle (1), selon la revendication 1, dans laquelle :
la au moins une partie montante en en saillie (SP) comprend plusieurs parties montantes ou en saillie (SP) ; et
la partie de tige (33) et la partie de chapeau (34) incluent chacune plusieurs parties montantes ou en saillie (SP).

3. Bielle (1) selon les revendications 1 ou 2, dans laquelle la surface de poussée (30t) de la grande extrémité (30) comporte des évidements (30c) au voisinage de, vers, à proximité de ou en un point adjacent à la surface fracturée (F) ;
et/ou
la au moins une partie montante ou en saillie (SP) a une forme de section transversale sensiblement triangulaire.

4. Bielle (1) selon l'une quelconque des revendications 1 à 3, dans laquelle :
la au moins une partie montante ou en saillie (SP) comporte une face latérale interne (S1) et une face latérale externe (S2) ; et
la face latérale interne (S1) forme un angle non inférieur à 20° et non supérieur à 70° avec la surface fracturée (F).

5. Bielle (1) selon l'une quelconque des revendications 1 à 4, dans laquelle l'alliage de titane est un alliage de Ti-5AI-1Fe.

6. Bielle (1) selon l'une quelconque des revendications 1 à 5, comprenant en outre une couche de nitrure de chrome formée sur au moins une partie de sa surface.

7. Moteur à combustion interne (100) pour un véhicule du type à enfourcher, le moteur à combustion interne comprenant la bielle (1) selon l'une quelconque des revendications 1 à 4.

8. Véhicule automobile, comprenant un véhicule du type à enfourcher, comprenant le moteur à combustion interne (100) selon la revendication 7.
